# EUROPÄISCHE PATENTSCHRIFT

(11) **EP 2 806 976 B1**
(45) Veröffentlichungstag und Bekanntmachung des Hinweises auf die Patenterteilung: **19.08.2015**
(21) Anmeldenummer: 13704886.4
(22) Anmeldetag: 23.01.2013
(51) Int. Cl.: B04C 5/12, B04C 5/15, B04C 5/20, B04C 9/00

(54) **VERFAHREN UND ANORDNUNG ZUR ABGASREINIGUNG BEI VAKUUM-STAHLBEHANDLUNGSPROZESSEN**
METHOD AND ARRANGEMENT FOR WASTE-GAS PURIFICATION IN VACUUM STEEL TREATMENT PROCESSES
PROCÉDÉ ET SYSTÈME D'ÉPURATION D'EFFLUENTS GAZEUX LORS DE PROCESSUS DE TRAITEMENT D'ACIER SOUS VIDE

(30) Priorität: 24.01.2012 AT 712012
(43) Veröffentlichungstag der Anmeldung: 03.12.2014
(73) Patentinhaber: INTECO special melting technologies GmbH, 8600 Bruck a.d. Mur (AT)
(72) Erfinder: LUVEN, Michael, 47906 Kempen (DE); OBITZ, Johannes, 47647 Kerken (DE); LUVEN, Arno, 47803 Krefeld (DE)
(74) Vertreter: Vötsch, Reiner
(86) Internationale Anmeldenummer: PCT/EP2013/051224
(87) Internationale Veröffentlichungsnummer: WO 2013/110647

(56) Entgegenhaltungen:
- EP-A1- 0 262 274
- DE-C- 556 179
- GB-A- 2 172 222
- JP-A- 2005 058 847
- US-A1- 2008 047 239

## Beschreibung

### Stand der Technik

Die Erfindung betrifft ein Verfahren zur Abgasreinigung nach dem Oberbegriff des Anspruchs 1. Ferner betrifft die Erfindung eine Anordnung zur Abgasreinigung nach einem erfindungsgemäßen Verfahren.

Ein Verfahren nach dem Oberbegriff des Anspruchs 1 ist aus der DE 556 179 C bekannt. Das aus der genannten Schrift bekannte Verfahren weist eine Anordnung zur Abgasreinigung mit einem Zyklonabscheider, einem Feinstaubfilter sowie einem Kühler auf. Bei dem bekannten Verfahren werden die zu reinigenden Abgase zunächst durch einen Wärmetauscher geführt, wo sie unter Wärmeabgabe gekühlt werden. Anschließend gelangen die Abgase in einen Zyklonabscheider, wo eine Grobabscheidung von Partikeln stattfindet. Zuletzt gelangt das von den Grobpartikeln befreite Abgas in einen Feinstaubfilter, wo eine Abscheidung von Feinstaub stattfindet. Nachteilig dabei ist, dass das Abgas vor der Abscheidung der Grobpartikel und der Feinpartikel in dem Zyklonabscheider und dem Feinstaubfilter gekühlt wird. Dadurch ist eine relative große Kühleinrichtung erforderlich, da das gesamte Volumen des Abgases herabgekühlt wird.

Bei den sogenannten sekundärmetallurgischen Prozessen bei der Stahlherstellung, insbesondere bei den Sauerstoff-Blasprozessen, wird der flüssige Stahl unter Vakuum behandelt. Die sogenannte Stahlentgasung sowie die Herstellung von Stählen mit niedrigem C-Gehalt durch sogenanntes Aufblasen von Sauerstoff sind Behandlungsvarianten, die aus dem Stand der Technik bekannt sind und weltweite Anwendung finden.

Die Anlagen für die Durchführung der vorgenannten Verfahren bestehen im Wesentlichen aus zwei Kernkomponenten, dem sogenannten Rezipienten einerseits, in dem Gießpfannen mit flüssigem Stahl mit einer Kapazität bis über 300t unter Vakuum behandelt werden, und andererseits dem Vakuumerzeuger, der über eine Saugleitung mit dem Rezipienten verbunden ist. Bei den unter vermindertem Druck zwischen 200mbar und 0,6mbar absolut ablaufenden Prozessen werden gelöste Gase wie auch Reaktionsgase freigesetzt, welche von dem Vakuumerzeuger, unter Aufrechterhaltung des jeweiligen absoluten Arbeitsdruckes, abgesaugt werden. Hierbei werden mitgerissene oder durch Verdampfung und Kondensation entstandene metallische und nichtmetallische Staubpartikel im Abgasstrom mittransportiert. Je nach Verfahren kann der Staub bei einer Abgastemperatur bis zu 500 °C und einer Korngröße von 0,5µm bis ≥ 100µm bei einem Massenanfall von 3kg bis 4kg Staub je Tonne Flüssigstahl betragen.

Für die hohen Saugvolumina bei niedrigem Saugdruck sind heute zwei verschiedenartige Vakuumpumpensysteme im Einsatz: Zum Einen sind es die weitgehend staubunempfindlichen Dampfstrahl-Ejektorpumpen, die einen höheren Energiebedarf haben, und zum Anderen die staubanfälligen mechanischen Vakuumpumpen.

Bei Anlagen, bei welchen das Vakuum mittels mehrstufiger Dampfstrahl-Ejektorpumpen erzeugt wird, stellt die Staubbelastung im Abgas keine direkte Funktionsbeeinträchtigung der Ejektorpumpen dar. Die Abgase werden hier über mehrstufige Ejektoren auf Atmosphärendruck komprimiert, wobei die im Abgas enthaltenen Stäube sich zu ca. 5% bis 10% an den Wandungen der Rohrleitungen und Ejektoren anlagern und die restlichen 90% bis 95% vom Kreislauf-Kühlwasser in den Einspritzkondensatoren ausgewaschen und ausgetragen werden. Hohe Aufwendungen für arbeitsintensive manuelle Reinigungsarbeiten sowie für die Reinigung des mit den Staubpartikeln verunreinigten Kreislaufwassers sind hier jedoch als nachteilhaft anzusehen. Die Vakuumerzeugung durch Dampfstrahler ist außerdem noch gekennzeichnet durch einen hohen Dampfverbrauch, der vor Ort in einem Dampferzeuger hoher Leistung erzeugt werden muss, was zusätzliche Kosten verursacht.

Wesentlich energiesparender ist dagegen der Betrieb von mechanischen Vakuumpumpen, die allerdings empfindlich gegen hohe Temperaturen und den Staub im angesaugten Gas sind. Daher ist für mechanische Vakuumpumpen grundsätzlich immer eine Gas/Staubtrennung und Gaskühlung zwischen dem Rezipienten und der Vakuumpumpe vorgesehen. In den bisher installierten Anlagen unter Verwendung von mechanischen Vakuumpumpen wird das abgesaugte Gas vor dem Eintritt in die Vakuumpumpen zunächst durch einen Zyklon geführt, in welchem eine Abscheidung von groben Staubteilchen erfolgt. Anschließend wird das Gas zur Kühlung in einen Gaskühler geleitet, und gelangt von dort durch einen Feinstaubfilter, der dazu dient, kleinste Staubteilchen ab- bzw. auszuscheiden.

Die oben angeführten Komponenten einer Vorrichtung unter Verwendung von mechanischen Vakuumpumpen werden hintereinander in die Vakuumleitung eingebaut, was abgesehen vom Platzbedarf eine entsprechende Länge der Vakuumleitung zur Folge hat. Dies widerspricht der Forderung nach einer möglichst kurzen Leitung zwischen dem Rezipienten und dem Vakuumpumpensatz, um eine größtmögliche Effektivität bei der Vakuumerzeugung im Rezipienten zu erzielen.

### Offenbarung der Erfindung

Ausgehend von dem Eingangs genannten Stand der Technik (DE 556 179 C) liegt der Erfindung die Aufgabe zugrunde, ein Verfahren zur Abgasreinigung derart weiterzubilden, dass die zur Kühlung des Abgases verwendete Kühleinrichtung möglichst einfach bzw. kompakt aufgebaut werden kann. Diese Aufgabe wird erfindungsgemäß bei einem Verfahren zur Abgasreinigung mit den Merkmalen des Anspruchs 1 gelöst. Insbesondere besteht der Kerngedanke der Erfindung darin, dass das erfindungsgemäße Verfahren drei Verfahrensschritte aufweist, die hintereinander derart ausgeführt werden, wobei in einem ersten Verfahrensschritt eine Grobabscheidung von Partikeln aus dem Abgas, in einem zweiten Schritt eine Feinstaubabscheidung von Partikeln aus dem Abgas und in einem dritten Schritt eine Gaskühlung in einem Zyklonabscheider stattfindet. Wesentlich dabei ist, dass das Abgas nach erfolgter Grobreinigung direkt über einen im Zyklonenabscheider eingebauten Feinstaubfilter und anschließend durch einen an den Feinstaubfilter sich anschließenden Gaskühler geführt wird. Dadurch ist es, im Gegensatz zum genannten Stand der Technik nicht erforderlich, die im Abgas befindlichen Grob- und Feinpartikel zu kühlen. Dadurch, dass alle erforderlichen Verfahrensschritte zur Entstaubung wie die Vorentstaubung, die Feinfilterung und die Gaskühlung in einem einzigen, vakuumdichten kompakten Zyklonabscheider mit eingebautem Feinstaubfilter mit angeschlossenem Gaskühler durchzuführen, wobei das in den Zyklon eintretende Rohgas durch schraubenartige Leitbleche in eine rotierende Bewegung gezwungen wird, wodurch einerseits die Grobstaubabscheidung begünstigt wird, und andererseits eine Vorkühlung des Gasstroms am Außenmantel des eingebauten Wärmetauschers bewirkt wird. Anschließend wird das Gas durch einen mit Mikro-Edelstahlfiltermatten bestückten Feinstaubfilter und den daran angeschlossenen wassergekühlten Gaskühler und über den Gastrichter in die Vakuumgasleitung zu den Vakuumpumpen geführt. Ganz besonders vorteilhaft ist es dabei, dass durch die kompakte Bauweise der Vorrichtung die Länge der Vakuumleitung erheblich verkürzt, wodurch der Druckverlust niedrig gehalten werden kann.

Vorteilhafte Weiterbildungen sind in den Unteransprüchen angeführt.

Die zusammengebaute Filter-Kühleinheit stützt sich lose auf den Abgastrichter der Vorrichtung ab, sodass ein einfacher Ausbau der Komponenten aus dem Gehäuse der Vorrichtung nach oben möglich ist, da diese im Wesentlichen nur angehoben werden müssen.

Der Zyklon verfügt am unteren trichterförmigen Ende über eine vakuumdichte Staubklappe, über die der anfallende Grob- und Feinstaub ausgetragen werden kann.

Der Feinfilter wird pneumatisch mittels Inertgas gereinigt. Unabhängig davon ist eine getrennte Flutung des Zykloninnenraumes mittels Inertgas vorteilhaft.

Weitere Vorteile, Merkmale und Einzelheiten der Erfindung ergeben sich aus der nachfolgenden Beschreibung eines bevorzugten Ausführungsbeispiels der Erfindung sowie anhand der Zeichnung. Diese zeigt in:
- Fig. 1: eine Anordnung zur Abgasreinigung nach dem Stand der Technik in einer Prinzipdarstellung,
- Fig. 2: eine erfindungsgemäße Anordnung zur Abgasreinigung, ebenfalls in einer Prinzipdarstellung und
- Fig. 3: einen bei der Anordnung gemäß der Fig. 2 verwendeten Zyklonabscheider in einem Längsschnitt.

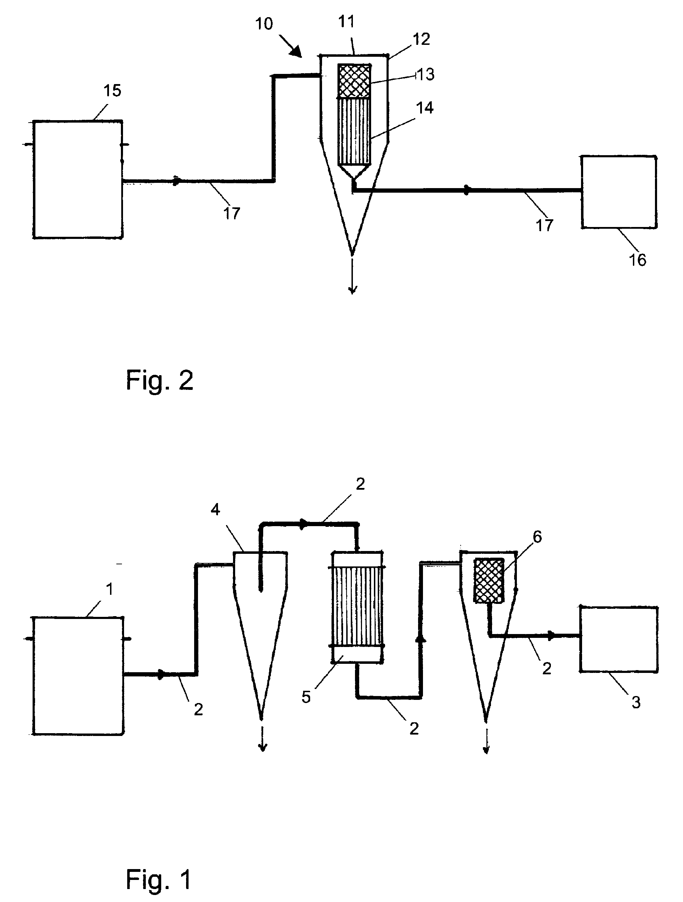

Die Fig. 1 zeigt eine dem derzeitigen Stand der Technik entsprechende Vorrichtung zur Abgasreinigung bei der Stahlherstellung mit einem in eine Saugleitung 2 zwischen einem Rezipienten 1 und einem Vakuumerzeuger 3 eingebauten Zyklonabscheider 4 zur Grobentstaubung, einem getrennt angeordneten Gaskühler 5 und einem nachfolgend angeordneten Feinfilter 6. Der Feinfilter 6 ist hier nach dem Gaskühler 5 angeordnet, da diese vielfach mit Tuchfiltersäcken bestückt sind, die vor zu hohen Gastemperaturen geschützt werden müssen.

Die Fig. 2 zeigt eine erfindungsgemäße Anordnung 10 zur Abgasentstaubung mit einem in dem Zyklongehäuse 11 eines Zyklonabscheiders 12 integrierten Feinstaubfilter 13 und einem Gaskühler 14. Der Zyklonabscheider 12 ist zwischen einem Rezipienten 15 und einem Vakuumerzeuger 16 in einer Vakuumleitung 17 angeordnet, wobei der Vakuumerzeuger 16 beliebiger Bauart sein kann.

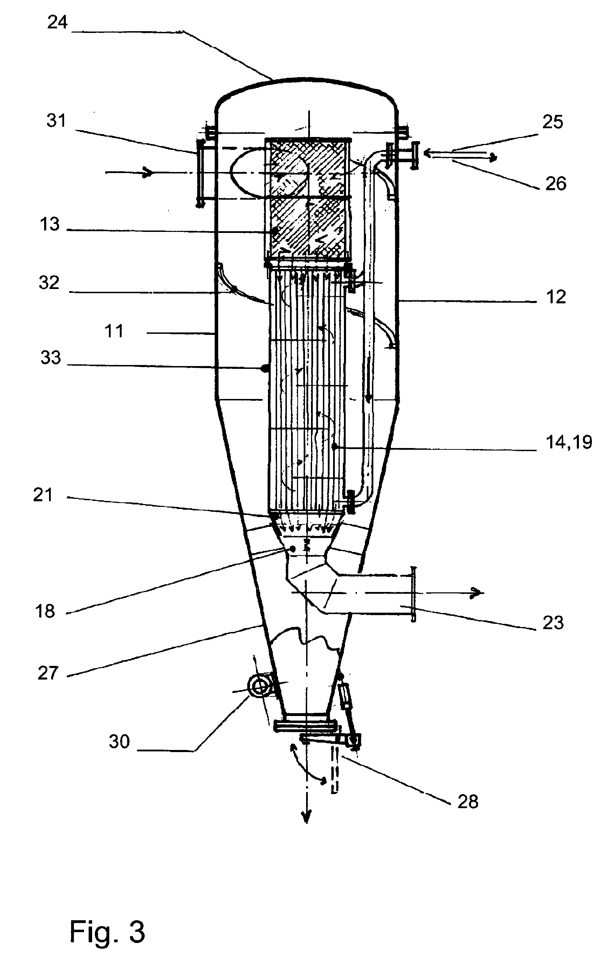

Die Fig. 3 zeigt den detaillierten Aufbau eines erfindungsgemäßen Zyklonabscheiders 12 mit dem eingebautem Feinstaubfilter 13 und dem Gaskühler 14.

Die Apparateeinheit besteht aus dem Zyklongehäuse 11 für die Vorentstaubung, dem Gaskühler 14, der als wassergekühlter Rohrbündelwärmetauscher 19 ausgebildet ist, und dem Feinstaubfilter 13 für die Feinfilterung des Abgases.

Der Feinstaubfilter 13 und der Rohrbündelwärmetauscher 19 sind miteinander verbunden und konzentrisch im vakuumdichten Zyklongehäuse 11 derart angeordnet, dass der untere Teil 21 des Rohrbündelwärmetauschers 19 konisch ausgebildet und im konischen Gegentrichter 18 des Gasaustrittstutzens 23 des Zyklongehäuses 11 lose aufsitzt. Hierdurch wird nach dem Öffnen des Deckels 24 des Zyklongehäuses 11 und nach dem Lösen der Wasserein- und Austrittsverbindungen 25 und 26 ein einfacher Ausbau für Wartungszwecke gewährleistet. Je nach Erfordernis kann auch der Feinstaubfilter 13 ohne den Gaskühler 14 bzw. den Rohrbündelwärmetauscher 19 ausgebaut werden.

Für den Staubaustrag ist am unteren Zyklonkonus 27 eine vakuumdichte Verschlusskappe 28, vorzugsweise mit pneumatischem oder hydraulischem Antrieb, installiert. Zur Unterstützung des Staubaustrags aus dem Zyklonabscheider 12 ist ein Rüttler 30 elektrischem oder pneumatischem Antrieb angebaut, der sich vorzugsweise am Zyklonkonus 27 befindet.

Die Funktion des Zyklonabscheiders 12 ist wie folgt: Das staubbeladene Heißgas wird durch die Saugkraft des Vakuumerzeugers 16 in den tangential angeordneten Eintrittsstutzen 31 des Zyklonabscheiders 12 geführt. Durch die hohe Eintrittsgeschwindigkeit und die dadurch einsetzende Drehbewegung wirken die Zentrifugalkräfte auf die größeren Partikel des Heißgases, so dass die Partikel in bekannter Weise im Zyklonkonus 27 aufgefangen werden. Schraubenartig geformte Leitbleche 32 an der Innenwand des Zyklongehäuses 11 unterstützen den Abscheidevorgang der Partikel. Durch den zunächst senkrecht gerichteten Gasstrom wird bereits eine Teilkühlung des Gases durch den wassergekühlten Mantel 33 des Rohrbündelwärmetauschers 19 erreicht.

Das gesamte Gasvolumen mit den Reststäuben wird über den Feinstaubfilter 13 und anschließend durch den Rohrbündelwärmetauscher 19 gesaugt. Der Feinstaubfilter 13 besteht vorzugsweise aus engmaschigen Micro-Edelstahlfiltermatten und ist auf die Feinkornpartikelgröße abgestimmt. Für die Reinigung des Feinstaubfilters 13 sind bei Anlagenstillstand pneumatische Impulsstöße, vorzugsweise mittels Inertgas, vom Inneren des Feinstaubfilters 13 in Richtung des Zyklongehäuses 11 vorgesehen, die den Staub nach unten in den Zyklonkonus 27 fördern.

Der wassergekühlte Rohrbündelwärmetauscher 19 ist nach dem Kreuzstromprinzip - Gas durch die Rohre, Wasser um die Rohre - ausgebildet. Das gekühlte und im Volumen geschrumpfte Reingas verlässt den Zyklonabscheider 12 in Richtung des Vakuumerzeugers 16 durch den Gasaustrittsstutzen 23. Je nach Staubkorngrößenverteilung kann es vorgesehen sein, den Feinstaubfilter 13 und den Gaskühler 14 im Zyklongehäuse 18 um 180 ° zu drehen.

Bei Prozeßende erfolgt die Flutung des gesamten Systems üblicherweise mit atmosphärischer Luft. Der hohe Feinkornanteil kann aufgrund einer O₂-Anreicherung an der Kornoberfläche zur Selbstentzündung oder in Verkettung mit anderen Betriebszuständen, z.B. Zündfunke mit ausreichender Kapazität, zur Explosion führen. Daher wird bei Prozeßende der Innenraum des Zyklonabscheiders 12 vorzugsweise vom übrigen Anlagenvolumen getrennt und mit Inertgas geflutet.

### Bezugszeichenliste:

- 1: Rezipient
- 2: Saugleitung
- 3: Vakuumerzeuger
- 4: Zyklonabscheider
- 5: Gaskühler
- 6: Feinfilter

- 10: Anordnung
- 11: Zyklongehäuse
- 12: Zyklonabscheider
- 13: Feinstaubfilter
- 14: Gaskühler
- 15: Rezipient
- 16: Vakuumerzeuger
- 17: Vakuumleitung
- 18: Gegentrichter
- 19: Rohrbündelwärmetauscher
- 21: unterer Teil
- 23: Gasaustrittstutzen
- 24: Deckel
- 25: Wassereintrittsverbindung
- 26: Wasseraustrittsverbindung
- 27: Zyklonkonus
- 28: Verschlussklappe
- 30: Rüttler
- 31: Eintrittsstutzen
- 32: Leitblech
- 33: Mantel

## Patentansprüche

1. Verfahren zur Abgasreinigung bei Entgasungsanlagen unter Verwendung einer Einrichtung (16) zur Erzeugung eines Unterdrucks, insbesondere mittels Dampfstrahl-Ejektorpumpen oder mechanischen Vakuumpumpen,
**dadurch gekennzeichnet,**
**dass** das von einem Rezipienten (15) kommende Abgas in einen Zyklonabscheider (12) geleitet wird, und dass die Verfahrensschritte Grobabscheidung von Partikeln aus dem Abgas und Feinstaubabscheidung von Partikeln aus dem Abgas sowie Gaskühlung in dem Zyklonabscheider (12) hintereinander in der Weise durchgeführt werden, dass das Abgas nach erfolgter Grobreinigung direkt über einen im Zyklonabscheider (12) eingebauten Feinstaubfilter (13) und anschließend durch einen an den Feinstaubfilter (13) sich anschließenden Gaskühler (14) in eine mit der Einrichtung (16) zur Erzeugung eines Unterdrucks verbundene Saugleitung (2) zur Einrichtung (16) geführt wird.

2. Verfahren nach Anspruch 1, **dadurch gekennzeichnet, dass** aus dem in den Zyklonabscheider (12) eintretenden Abgas durch eine durch Leitbleche (32) bewirkte, insbesondere schraubenförmige Bewegung grobe Staubpartikel ausgeschieden werden, und dass das Abgas zur Vorkühlung eine Außenwand (33) des als Wärmetauscher (19) ausgebildeten Gaskühlers (14) umströmt.

3. Anordnung (10) zur Durchführung des Verfahrens nach Anspruch 1 oder 2, **dadurch gekennzeichnet, dass** die Anordnung (10) einen Zyklonabscheider (12) mit einem Zyklongehäuse (11) umfasst, wobei in dem Zyklongehäuse (11) ein Feinstaubfilter (13) und ein Gaskühler (14) angeordnet sind, und wobei in den Zyklonabscheider (12) eintretendes Abgas zwangsweise über den Feinstaubfilter (13) und den Gaskühler (14) zu einer mit der Einrichtung (16) verbundenen Saugleitung (2) führbar ist.

4. Anordnung nach Anspruch 3, **dadurch gekennzeichnet, dass** der Feinstaubfilter (13) einen aus dem Zyklongehäuse (11) herausragenden Gasaustrittsstutzen (23) aufweist, und dass das Zyklongehäuse (11) eine Austragseinrichtung in Form einer Verschlussklappe (28) für Partikel aufweist.

5. Anordnung nach Anspruch 4, **dadurch gekennzeichnet, dass** die Verschlussklappe (28) an Grund eines konusförmigen Bereichs (17) des Zyklongehäuses (11) angeordnet ist, und dass der Bereich (17) mit einer Rütteleinrichtung (30) zum Lösen von Partikeln im Zyklongehäuse (11) gekoppelt ist.

6. Anordnung nach einem der Ansprüche 3 bis 5, **dadurch gekennzeichnet, dass** im Zyklongehäuse (11) wenigstens ein vorzugsweise schraubenförmiges Leitblech (32) zur Abgasführung angebracht sind.

7. Anordnung nach Anspruch 6, **dadurch gekennzeichnet, dass** das wenigstens eine Leitblech (32) das Abgas auf die Außenwand (33) des Gaskühlers (13) leitet.

8. Anordnung nach einem der Ansprüche 3 bis 7, **dadurch gekennzeichnet, dass** der in dem Zyklongehäuse (11) eingebaute Feinstaubfilter (13) und der Gaskühler (14) miteinander verbunden sind und lose auf einem Gehäuseabschnitt (18) des Gasaustrittsstutzens (23) aufsitzen.

9. Anordnung nach einem der Ansprüche 3 bis 8, **dadurch gekennzeichnet, dass** der Feinstaubfilter (13) Mikro-Edelstahlfiltermatten aufweist und zum pneumatischen Reinigen mittels Inertgas eingerichtet ist.

10. Anordnung nach einem der Ansprüche 4 bis 9, **dadurch gekennzeichnet, dass** die Staubklappe (13) das Zyklongehäuse (11) vakuumdicht abdichtet.

## Claims

1. A method for waste gas purification in dust separation plants making use of a device (16) for generating a negative pressure, in particular by means of steam jet ejector pumps or mechanical vacuum pumps,
**characterised in that**
the waste gas coming from a vacuum chamber (15) is conducted into a cyclone separator (12), and that the method steps of coarse separation of particles from the waste gas and fine dust separation of particles from the waste gas and gas cooling in the cyclone separator (12) are carried out in succession in such a way that the waste gas, after coarse purification has taken place, is conducted directly via a fine dust filter (13) installed in the cyclone separator (12) and subsequently through a gas cooler (14), which follows the fine dust filter (13), into a suction line (2) connected to the device (16) for generating a negative pressure and to the device (16).

2. The method according to claim 1, **characterised in that** coarse particles are separated from the waste gas entering into the cyclone separator (12) by an, in particular, helicoidal motion brought about by baffle plates (32), and that, for the purpose of preliminary cooling, the waste gas flows around an outer wall (33) of the gas cooler (14) constituted as a heat exchanger (19).

3. An arrangement (10) for performing the method according to claim 1 or 2, **characterised in that** the arrangement (10) comprises a cyclone separator (12) with a cyclone housing (11), wherein a fine dust filter (13) a gas cooler (14) are disposed in the cyclone housing (11), and wherein waste gas entering into the cyclone separator (12) can be conveyed forcibly via the fine dust filter (13) and the gas cooler (14) to a suction line (2) connected to the device (16).

4. The arrangement according to claim 3, **characterised in that** the fine dust filter (13) comprises a gas outlet connecting piece (23) projecting out of the cyclone housing (11), and that the cyclone housing (11) comprises a removal device in the form of a closure cap (28) for particles.

5. The arrangement according to claim 4, **characterised in that** the closure cap (28) is disposed at the base of a cone-shaped region (17) of the cyclone housing (11), and that the region (17) is coupled with an agitator device (30) for loosening particles in the cyclone housing (11).

6. The arrangement according to any one of claims 3 to 5, **characterised in that** at least one preferably helicoidal baffle plate (32) for conducting the waste gas is fitted in the cyclone housing (11).

7. The arrangement according to claim 6, **characterised in that** the at least one baffle plate (32) conducts the waste gas onto the outer wall (33) of the gas cooler (13).

8. The arrangement according to any one of claims 3 to 7, **characterised in that** the fine dust filter (13) installed in the cyclone housing (11) and the gas cooler (14) are connected to one another and sit loosely on a housing section (18) of the gas outlet connecting piece (23).

9. The arrangement according to any one of claims 3 to 8, **characterised in that** the fine dust filter (13) comprises stainless steel microfilter mats and is equipped for pneumatic cleaning by means of inert gas.

10. The arrangement according to any one of claims 4 to 9, **characterised in that** the dust cap (13) of the cyclone housing (11) is sealed vacuum-tight.

## Revendications

1. Procédé d'épuration des gaz d'échappement d'installations de dégazage, par recours à un dispositif (16) formant une dépression, en particulier au moyen de pompes éjectrices de jet de vapeur ou de pompes mécaniques aspirantes, **caractérisé en ce que** le gaz d'échappement provenant d'un récipient (15) est amené dans un séparateur à cyclone (12) et **en ce que** les étapes de traitement que sont la séparation des particules grossières du gaz d'échappement et une séparation des poussières de particules fines du gaz d'échappement ainsi que le refroidissement du gaz sont exécutés successivement dans le séparateur à cyclone (12) de telle sorte qu'après que l'épuration grossière a été réalisée, le gaz d'échappement est amené directement au dispositif (16) à travers un filtre (13) à poussières fines incorporé dans le séparateur à cyclone (12), ensuite à travers un refroidisseur (14) de gaz qui se raccorde au filtre (13) à poussières fines et dans un conduit d'aspiration (2) relié au dispositif (16) de formation d'une dépression.

2. Procédé selon la revendication 1, **caractérisé en ce que** des particules grossières de poussière sont séparées du gaz d'échappement pénétrant dans le séparateur à cyclone (12) par un déplacement obtenu à l'aide de tôles de guidage (32), en particulier disposées en hélice, et **en ce que** le gaz d'échappement balaie une paroi extérieure (33) du refroidisseur de gaz (14) configuré comme échangeur de chaleur (19) en vue de son pré-refroidissement.

3. Ensemble (10) en vue de mettre en oeuvre le procédé selon les revendications 1 ou 2, **caractérisé en ce que** l'ensemble (10) comporte un séparateur à cyclone (12) doté d'un caisson de cyclone (11), un filtre (13) à poussières fines et un refroidisseur de gaz (14) étant disposés dans le caisson de cyclone (11), le gaz d'échappement pénétrant dans le séparateur (12) à cyclone pouvant être amené de manière forcée à travers le filtre (13) à poussières fines et le refroidisseur de gaz (14) vers un conduit d'aspiration (2) raccordé au dispositif (16).

4. Ensemble selon la revendication 3, **caractérisé en ce que** le filtre (13) à poussières fines présente une tubulure (23) de sortie de gaz qui sort du caisson de cyclone (11) et **en ce que** le caisson de cyclone (11) présente un dispositif d'extraction des particules qui présente la forme d'un clapet de fermeture (28).

5. Ensemble selon la revendication 4, **caractérisé en ce que** le clapet de fermeture (28) est disposé au fond d'une partie en cône (17) du caisson de cyclone (11) et **en ce que** la partie (17) est accouplée à un dispositif de secousse (30) qui détache les particules présentes dans le caisson de cyclone (11).

6. Ensemble selon l'une des revendications 3 à 5, **caractérisé en ce qu'**au moins une tôle de guidage (32) de préférence en forme d'hélice est placée dans le caisson de cyclone (11) pour l'évacuation des gaz.

7. Ensemble selon la revendication 6, **caractérisé en ce que** la ou les tôles de guidage (32) guident les gaz d'échappement sur la paroi extérieur (33) du refroidisseur de gaz (13).

8. Ensemble selon l'une des revendications 3 à 7, **caractérisé en ce que** le filtre (13) à poussières fines monté dans le caisson de cyclone (11) et le refroidisseur de gaz (14) sont raccordés l'un à l'autre et reposent lâchement sur une partie de caisson (18) de la tubulure (23) de sortie de gaz.

9. Ensemble selon l'une des revendications 3 à 8, **caractérisé en ce que** le filtre (13) à poussières fines présente des tapis de microfiltration en acier allié et est conçu pour être nettoyé pneumatiquement au moyen d'un gaz inerte.

10. Ensemble selon l'une des revendications 4 à 9, **caractérisé en ce que** le clapet (13) à poussières ferme le caisson de cyclone (11) de manière étanche en dépression.
